Europäisches Patentamt

European Patent Office

Office européen des brevets

(19)

(11) Publication number: **0 309 245**
**A1**

(12)

# EUROPEAN PATENT APPLICATION

(21) Application number: **88308802.3**

(22) Date of filing: **22.09.88**

(51) Int. Cl.⁴: **C 08 F 10/14**
**C 08 F 4/64**

(30) Priority: **22.09.87 JP 238184/87**

(43) Date of publication of application:
**29.03.89 Bulletin 89/13**

(84) Designated Contracting States: **BE DE FR GB**

(71) Applicant: **SUMITOMO CHEMICAL COMPANY, LIMITED**
**15 Kitahama 5-chome Higashi-ku**
**Osaka-shi Osaka 541 (JP)**

(72) Inventor: **Wakatsuki, Kizuku**
**12-909, Hozumidai**
**Ibaraki-shi Osaka (JP)**

**Wakamatsu, Kazuki**
**6-11-13, Nagauraekimae Sodegauramachi**
**Kimitsu-gun Chiba (JP)**

(74) Representative: **Diamond, Bryan Clive et al**
**Gee & Co. Chancery House Chancery Lane**
**London WC2A 1QU (GB)**

(54) Catalytic process for polymerizing 4-methylpentene-1.

(57) To homopolymerize 4-methyl-pentene-1 or copolymerize 4-methylpentene-1 and up to 20 mol% of other α-olefin monomers (e.g. ethylene), polymerization is carried out in the presence of a catalyst system composed of (A) a solid catalyst component comprising magnesium and titanium, (B) an organoaluminum compound e.g. a trialkyl aluminum, and (C) in amount of 0.005 to 1.0 mol per mol of (B), a silicon compound represented by the formula:

$R^1_2Si(OR^2)_2$ and/or $R^3Si(OR^4)_3$

wherein $R^1$, $R^2$, $R^3$ and $R^4$ each represents a hydrocarbon group, usually at a temperature of 30-100 °C, optionally with an inert hydrocarbon as solvent. By the process, a highly stereoregular polymer (insoluble in cold xylene) of 4-methylpentene-1 can be produced without requiring prepolymerization.

EP 0 309 245 A1

Bundesdruckerei Berlin

## Description

## CATALYTIC PROCESS FOR POLYMERIZING 4-METHYLPENTENE-1

This invention relates to a process for homopolymerizing 4-methylpentene-1 or copolymerizing 4-methylpentene-1 and a small amount of other $\alpha$-olefin monomers.

It is known that stereoregular polymerization of propylene can be achieved by using a catalyst system composed of (1) a solid catalyst comprising, as essential components, magnesium and titanium, (2) an organoaluminum compound, and (3) an electron donor, and many embodiments of this technique have been proposed. However, direct application of this technique to 4-methylpentene-1 fails to obtain satisfactorily stereoregular polymers.

Conventional processes for obtaining highly stereoregular polymers of 4-methylpentene-1 include a technique employing a combination of a specific catalyst system and prepolymerization as disclosed in JP-A-59-206418 (the term "JP-A" as used herein refers to an "unexamined published Japanese patent application"). This process essentially requires prepolymerization under specific conditions and is not, therefore, satisfactory as a polymerization process.

One object of this invention is to provide a process for producing a highly stereoregular homo- or copolymer of 4-methylpentene-1.

The inventors have conducted extensive studies about electron donors to be used as a catalyst component. As a result, it has now been found that a highly stereoregular polymer of 4-methylpentene-1 can be obtained without involving prepolymerization by using a specific silicon compound as an electron donor.

That is, the present invention relates to a process for homopolymerizing 4-methylpentene-1 or copolymerizing 4-methylpentene-1 and a small amount of other $\alpha$-olefin monomers, wherein the polymerization is carried out in the presence of a catalyst system composed of (A) a solid catalyst component comprising, as essential components, magnesium and titanium, (B) an organoaluminum compound and (C) a silicon compound represented by the formula:

$$R^1_2Si(OR^2)_2 \text{ and/or } R^3Si(OR^4)_3$$

wherein $R^1$, $R^2$, $R^3$ and $R^4$, which may be the same or different, each represents a hydrocarbon group.

The solid catalyst component (A) which can be used in the present invention contains magnesium and titanium as essential components. The solid catalyst component (A) is conventional and includes, for example, those synthesized by methods disclosed in JP-B-57-57042, JP-A-51-92885, and JP-A-58-83006 (the term "JP-B" as used herein refers to an "examined Japanese patent publication"). Particularly preferred are solid catalysts containing a trivalent titanium compound, as described in JP-A-61-218606 and 61-287904.

The above-recited preferred solid catalysts containing a trivalent titanium compound can be prepared by reducing a titanium compound represented by the formula:

$$Ti(OR^5)_nX_{4-n}$$

wherein $R^5$ represents a hydrocarbon group having from 1 to 20 carbon atoms; X represents a halogen atom; and $n$ represents a number greater than 0 and no greater than 4, with an organomagnesium compound in the presence of an organosilicon compound having an Si-O bond, and treating the resulting solid product with an ester compound and a mixture of an ether compound and titanium tetrachloride.

Specific examples of the hydrocarbon group as represented by $R^5$ are alkyl groups, e.g., methyl, ethyl, propyl, isopropyl, amyl, isoamyl, hexyl, butyl, and octyl groups; and aryl groups, e.g., phenyl, xylyl and naphthyl groups.

The organomagnesium compound to be used for reduction of the titanium compound suitably includes a Grignard reagent and a dialkylmagnesium. Specific examples thereof include methylmagnesium chloride, ethylmagnesium bromide, propylmagnesium iodide, butylmagnesium bromide, butylmagnesium chloride, butylmagnesium iodide, sec-butylmagnesium bromide, t-butylmagnesium bromide, diethylmagnesium, dibutylmagnesium and diphenylmagnesium.

The organoaluminum compound which can be used as the component (B) is a compound having at least one Al-C bond per molecule and is used in an amount of from 1 to 1,000 mols, preferably from 5 to 600 mols, per mol of the titanium atom in the component (A). Specific examples of the organoaluminum compound include trialkylaluminums, e.g., trimethylaluminum, triethylaluminum, triisobutylaluminum, and trihexylaluminum; dialkylaluminum hydrides, e.g., diethylaluminum hydride and diisobutylaluminum hydride; mixtures of a trialkylaluminum and a dialkylaluminum halide; dialkylaluminum halides, e.g., dimethylaluminum iodide, diethylaluminum chloride, and dibutylaluminum bromide; mixtures of a trialkylaluminum and a dialkylaluminum halide; and aluminooxanes, e.g., tetraethyldialuminooxane and tetrabutyldialuminooxane. Preferred among them are trialkylaluminums and mixtures of a trialkylaluminum and a dialkylaluminum halide.

In the formulae representing the silicon compound which can be used as the component (C), $R^1$, $R^2$, $R^3$, and $R^4$ include an alkyl group, a cycloalkyl group, an alkenyl group, an aryl group, and an alkoxyalkyl group. Specific examples of these hydrocarbon groups are methyl, ethyl, propyl, isopropyl, butyl, isobutyl, hexyl, 2-methylpentyl, cyclohexyl, cyclooctyl, allyl, phenyl, p-methylphenyl, o-methylphenyl and 2-methoxyethyl groups.

Specific examples of the silicon compound are dimethyldimethoxysilane, methyltrimethoxysilane, dimethyldiethoxysilane, methyltriethoxysilane, ethyltrimethoxysilane, ethyltriethoxysilane, methyldimethoxyethoxysilane, phenyltrimethoxysilane, phenylmethyldimethoxysilane, diphenyldiethoxysilane and isobutyltrimethoxysilane.

These silicon compounds may be used either alone or in combination of two or more thereof.

The silicon compound is used in an amount of from 0.005 to 1.0 mol, preferably from 0.05 to 0.3 mol, per mol of the component (B).

In the copolymerization of 4-methylpentene-1, a comonomer or comonomers can be selected arbitrarily from $\alpha$-olefins other than 4-methylpentene-1, such as ethylene, propylene, butene, pentene-1, hexene-1, octene-1, decene-1, octadecene-1, 3-methylbutene-1 and 3-methylpentene-1. It is desirable that the content of these other $\alpha$-olefins in the copolymer is not more than 20 mol%, preferably not more than 10 mol%.

Polymerization of 4-methylpentene-1 according to the present invention is carried out by slurry polymerization, bulk polymerization, or gas phase polymerization in the presence of the above-described catalyst system. 4-Methylpentene-1 per se may serve as a polymerization solvent, or an inert hydrocarbon may be used as a polymerization solvent. Such an inert hydrocarbon includes butane, hexane, heptane, octane, benzene, toluene, xylene and cyclohexane.

The polymerization temperature usually ranges from 30 to 100°C, preferably from 40 to 70°C, though varying depending on the kind of the catalyst or the method of polymerization. The molecular weight modification of the polymer can suitably be effected by using hydrogen.

The present invention is illustrated in greater detail by the following examples.

In these examples, all the percentages are by weight.

## EXAMPLE 1

(A) Synthesis of Organomagnesium Compound:

A 1 liter-volume flask equipped with a stirrer, a reflux condenser, a dropping funnel, and a thermometer was purged with argon prior to use. To the flask was charged 32 g of flaky magnesium for preparing a Grignard reagent. In the dropping funnel were charged 120 g of butyl chloride and 500 ml of dibutyl ether, and an about 30 ml portion thereof was added dropwise to the magnesium in the flask to commence reaction. After the commencement of the reaction, the dropwise addition was further continued for 4 hours at 50°C. After completion of the dropwise addition, the reaction was continued for an additional 1 hour at 60°C. The reaction mixture was cooled to room temperature, and the solid was separated by filtration. The butylmagnesium chloride in dibutyl ether was then hydrolyzed with 1 N sulfuric acid, and the concentration was found to be 2.2 mol/liter as determined by back-titration with a 1 N sodium hydroxide aqueous solution using phenolphthalein as an indicator.

(B) Synthesis of Solid Product:

After purging a 500 ml-volume flask equipped with a stirrer and a dropping funnel with argon, 300 ml of heptane, 4.1 g (12.1 mmols) of tetrabutoxytitanium, and 42.9 g (206 mmols) of tetraethoxysilane were charged therein to form a uniform solution.

Then, 100 ml of the organomagnesium compound synthesized in (A) above was slowly added dropwise to the solution from the dropping funnel over 2 hours while maintaining the solution at 5°C. After the addition, the mixture was stirred at room temperature for 1 hour, and the insoluble matter was separated from the mother liquor at room temperature. The solid was washed three times with 300 ml portions of heptane and dried under reduced pressure to obtain 32 g of a brown solid product.

The resulting solid product contained 1.7% of trivalent titanium atom, 18.2% of magnesium atom, 2.2% of silicon atom, 0.8% of dibutyl ether, 33.5% of epoxy group, and 2.4% of butoxy group. The wide-angle X-ray diffraction pattern (Cu-K$\alpha$ rays) of the solid product showed no clear diffraction peak, indicating an amorphous structure of the solid product.

(C) Treatment with Ester:

A 200 ml-volume flask was purged with argon, and 15 g of the solid product as synthesized in (B) above, 90 ml of monochlorobenzene, and 2.7 ml of diisobutyl phthalate were charged therein to effect reaction at 80°C for 1 hour. After the reaction, the solid was separated and washed three times with 120 ml portions of heptane. The thus-treated solid was found to contain 1.5% of diisobutyl phthalate.

(D) Synthesis of Solid Catalyst Component:

In the flask containing the ester-treated solid were charged 90 ml of monochlorobenzene, 5.5 ml (32.5 mmols) of dibutyl ether, and 49.3 ml (450 mmols) of titanium tetrachloride, and the mixture was allowed to react at 80°C for 1 hour. After completion of the reaction, the solid was separated from the reaction mixture at 80°C and washed twice with 90 ml portions of monochlorobenzene at that temperature and then 4 times with 120 ml portions of heptane at room temperature.

The above-described treatment with a mixture of dibutyl ether and titanium tetrachloride was repeated once more under the same conditions to obtain 13.3 g of an ocherous solid catalyst component. The solid catalyst component was found to contain 1.9% of titanium atom, 21.2% of magnesium atom, 0.2% of silicon atom, 0.1% of butoxy group, 1.2% of ethoxy group, 1.6% of diisobutyl phthalate, 2.3% of dibutyl ether, and 67.0% of chlorine.

(E) Polymerization of 4-Methylpentene-1:

A 130 ml-volume stainless steel-made autoclave equipped with a magnetic stirrer was purged with argon, and 0.44 mmol of triethylaluminum (TEA), 0.022 mmol of ethyltriethoxysilane, 8.4 mg of the solid catalyst component obtained in (D) above, and 80 ml of 4-methylpentene-1 were charged in the autoclave. After the mixture was stirred at 60°C for 1 hour, 2 ml of methanol was added thereto to stop the polymerization. The resulting slurry was poured into 1 liter of methyl alcohol, and the mixture was stirred, followed by filtration to recover the whole polymer produced. Drying under reduced pressure at 80°C for 4 hours gave 5.73 g of poly(4-methylpentene-1). Thus, the yield (g) of the polymer per gram of the solid catalyst component (hereinafter referred to as PMP/cat) was 682. The cold xylene-soluble matter content (hereinafter referred to as CXS) of the resulting polymer was found to be 5.8%.

The cold xylene-soluble matter content (CXS) was determined as follows. 5 g of poly(4-methylpentene-1) was completely dissolved in 500 ml of boiling xylene, the temperature of the solution was decreased to 20°C, and the solution was allowed to stand for 4 hours. Thereafter, the system was filtered, and the filtrate was evaporated to dryness and dried under reduced pressure at 60°C. The CXS (% by weight) was obtained by weighing the resulting solid.

## EXAMPLE 2

4-Methylpentene-1 was polymerized in the same manner as in Example 1, except for varying the amount of the ethyltriethoxysilane as shown in Table 1 below. The results obtained are also shown in Table 1.

## EXAMPLE 3

4-Methylpentene-1 was polymerized in the same manner as in Example 1, except for using dimethyldiethoxysilane in an amount indicated in Table 1 in place of the ethyltriethoxysilane. The results obtained are also shown in Table 1.

## COMPARATIVE EXAMPLE 1

4-Methylpentene-1 was polymerized in the same manner as in Example 1, except for using no silicon compound. The results obtained are shown in Table 1.

## COMPARATIVE EXAMPLES 2 AND 3

4-Methylpentene-1 was polymerized in the same manner as in Example 1, except for using trimethylethoxysilane in an amount indicated in Table 1 in place of the ethyltriethoxysilane. The results obtained are also shown in Table 1.

TABLE 1

| Example No. | TEA (mmol) | Silicon Compound (mmol) | Si/Al (mol/mol) | PMP/cat (g/g) | CXS (%) |
|---|---|---|---|---|---|
| Example 1 | 0.44 | Ethyltriethoxysilane (0.022) | 0.05 | 682 | 5.8 |
| " 2 | " | " (0.044) | 0.10 | 428 | 3.6 |
| " 3 | " | Dimethyldiethoxysilane (0.044) | 0.10 | 756 | 5.6 |
| Comparative Example 1 | " | -- | -- | 2,100 | 26.0 |
| " 2 | " | Trimethylethoxysilane (0.044) | 0.10 | 1,800 | 25.9 |
| " 3 | " | " (0.088) | 0.20 | 1,193 | 14.2 |

## EXAMPLE 4

After purging a 3 liter-volume stainless steel-made autoclave equipped with a stirrer with argon, 250 ml of dry heptane, 1,000 ml of 4-methylpentene-1, 4.4 mmols of TEA, 0.11 mmol of ethyltriethoxysilane, and 54.5 mg of the solid catalyst component prepared in Example 1-(D) were charged in the autoclave, and hydrogen was introduced therein in an amount corresponding to a partial pressure of 0.33 kg/cm$^2$. The autoclave was heated to 60°C to commence polymerization, and the polymerization was continued at that temperature for 4 hours. After completion of the polymerization, 50 ml of isobutyl alcohol was added thereto to stop the polymerization. The resulting slurry was filtered through a glass filter (G-3) and washed with 1,000 ml of dry heptane. The resulting solid polymer was dried at 80°C for 4 hours under reduced pressure to obtain 280 g of poly(4-methylpentene-1) as a powder. The filtrate and the washing were combined, and the solvent was removed therefrom by the use of an evaporator to obtain 14.8 g of a solvent-soluble polymer.

The proportion (%) of the solvent-insoluble portion in the total polymer (hereinafter referred to as HIP) was found to be 95.0%. PMP/cat was 5,409, and CXS was 2.1%.

To the resulting polymer were added 0.1 PHR of Irganox® 1010 (a trade name of Ciba-Geigy AG) and 0.1 PHR of Ultranox ® 626 (a trade name of Ciba-Geigy AG). The MFR (melt flow rate) as determined at 260°C under a load of 5 kg was found to be 60 g/10 min.

Irganox 1010 is tetrakis [methylene-3-(3',5'-t-dibutyl-4-hydroxyphenyl)propionate]-methane;

Ultranox 626 is bis (2,4-di-t-butylphenyl)pentaerythritol diphosphite, and is produced by BorgWarner Chemical Corporation.

## EXAMPLES 5 AND 6

4-Methylpentene-1 was polymerized in the same manner as in Example 4, except for varying the amount of the ethyltriethoxysilane as shown in Table 2. The results obtained are also shown in Table 2.

## EXAMPLE 7

4-Methylpentene-1 was polymerized in the same manner as in Example 4, except for using phenyltrimethoxysilane in an amount indicated in Table 2 in place of the ethyltriethoxysilane. The results obtained are also shown in Table 2.

## COMPARATIVE EXAMPLES 4 AND 5

4-Methylpentene-1 was polymerized in the same manner as in Example 4, except for using trimethylethoxysilane in an amount indicated in Table 2 in place of the ethyltriethoxysilane. The results obtained are also shown in Table 2.

TABLE 2

| Example No. | TEA (mmol) | Silicon Compound (mmol) | Si/Al (mol/mol) | PMP/cat (g/g) | HIP (%) |
|---|---|---|---|---|---|
| Example 4 | 4.4 | Ethyltriethoxysilane (0.11) | 0.025 | 5,409 | 95.0 |
| " 5 | 4.4 | " (0.22) | 0.05 | 2,309 | 97.1 |
| " 6 | 4.4 | " (1.1) | 0.25 | 2,231 | 96.8 |
| " 7 | 4.4 | Phenyltrimethoxysilane (0.22) | 0.05 | 5,250 | 94.9 |
| Comparative Example 4 | 4.4 | Trimethylethoxysilane (1.1) | 0.25 | 7,666 | 87.8 |
| " 5 | 4.4 | " (2.64) | 0.60 | 3,128 | 93.2 |

EXAMPLE 8

4-Methylpentene-1 was polymerized in the same manner as in Example 4, except for using triisobutylaluminum in place of the triethylaluminum and varying the amount of the ethyltriethoxysilane as indicated in Table 3. The results obtained are also shown in Table 3.

EXAMPLE 9

4-Methylpentene-1 was polymerized in the same manner as in Example 4, except for using an equimolar mixture of triethylaluminum and diethylaluminum chloride in place of the triethylaluminum and varying the amount of the ethyltriethoxysilane as indicated in Table 3. The results obtained are also shown in Table 3.

TABLE 3

| Example No. | Organoalu-minum Compound (mmol) | Ethyltriethoxy-silane (mmol) | Si/Al (mol/mol) | PMP/cat g/g | HIP (%) |
|---|---|---|---|---|---|
| 8 | Triisobutylaluminum (4.4) | 1.1 | 0.25 | 2,601 | 96.2 |
| 9 | Triethylalu-minum (2.2) + Diethylalu-minum chloride (2.2) | 0.11 | 0.025 | 6,863 | 94.5 |

EXAMPLE 10

(A) Preparation of Solid Catalyst Component:

A mixture of 4.76 g (50 mmols) of anhydrous magnesium chloride, 25 ml of decane, and 23.4 ml (150 mmols) of 2-ethylhexyl alcohol was allowed to react under heating at 130°C for 2 hours to form a uniform solution. To the solution was added 1.11 g (7.5 mmols) of phthalic anhydride, and the mixture was stirred at 130°C for 1 hour to uniformly dissolve the phthalic anhydride. The resulting uniform solution was cooled to room temperature, and the total amount of the solution was then added dropwise to 200 ml (1.8 mols) of titanium tetrachloride kept at -20°C over a period of 1 hour. After the dropwise addition, the temperature of the mixture was elevated up to 110°C over a period of 4 hours. When the temperature reached 110°C, 2.68 ml (12.5 mmols) of dibutyl phthalate was added thereto, and the mixture was kept at that temperature for an additional period of 2 hours while stirring. The mixture was filtered while hot, and the collected solid was resuspended in 200 ml of titanium tetrachloride, followed by heating at 110°C for 2 hours. After completion of the reaction, the mixture was again filtered while hot, and the collected solid was thoroughly washed with decane and hexane at 110°C until any free titanium compound had been no longer detectable. The thus-synthesized solid catalyst component contained 6.7% of titanium.

(B) Polymerization of 4-Methylpentene-1:

4-Methylpentene-1 was polymerized in the same manner as in Example 4, except for using the above-synthesized solid catalyst component. As a result, PMP/cap was 4,767, and HIP was 96.6%.

EXAMPLE 11

A 3 liter-volume stainless steel-made autoclave equipped with a stirrer was purged with argon. To the autoclave were charged 250 ml of dry heptane, 1,000 ml of 4-methylpentene-1, 5 ml of 1-decene, 4.4 mmols of triethylaluminum, 0.11 mmol of ethyltriethoxysilane, and 29.5 mg of the solid catalyst component as prepared in Example 1-(D), and hydrogen was introduced therein in an amount corresponding to a partial pressure of 0.33 kg/cm$^2$. The autoclave was heated to 50°C to commence polymerization. 1-Decene was fed thereto at a rate of 10 ml/hour for 2 hours, and the polymerization was continued for an additional period of 2 hours. After completion of the polymerization, 50 ml of isobutyl alcohol was added to the reaction mixture to stop the polymerization. The resulting slurry was filtered through a glass filter (G-3), and the solid was washed with 1,000 ml of dried heptane. The resulting solid polymer was dried at 80°C for 4 hours under reduced pressure to obtain 217.6 g of poly(4-methylpentene-1) as a powder. The filtrate and the washing were combined and evaporated to remove the solvent by the use of an evaporator to obtain 13.6 g of a solvent-soluble polymer. The HIP was 94.1%; PMP/cat was 6,216 g/g; and the 1-decene content in the polymer was 4.6%.

To the resulting polymer were added 0.1 PHR of Irganox® 1010 and 0.1 PHR of Ultranox® 626. The MFR as determined at 260°C under a load of 5 kg was found to be 16.8 g/10 min.

COMPARATIVE EXAMPLE 6

4-Methylpentene-1 and 1-decene were copolymerized in the same manner as in Example 11, except for using trimethylethoxysilane in an amount shown in Table 4 in place of the ethyltriethoxysilane. The results obtained are also shown in Table 4.

TABLE 4

| Example No. | TEA (mmol) | Silicon Compound (mmol) | Si/Al (mol/mol) | PMP/cat (g/g) | 1-Decene Content (%) | HIP (%) |
|---|---|---|---|---|---|---|
| Example 11 | 4.4 | Ethyltriethoxysilane (0.11) | 0.025 | 6,216 | 4.6 | 94.1 |
| Comparative Example 6 | 4.4 | Trimethylethoxysilane (2.64) | 0.60 | 2,907 | 3.2 | 91.6 |

As described above, the present invention provides a novel catalyst system by which a highly stereoregular polymer of 4-methylpentene-1 can be obtained without involving prepolymerization.

**Claims**

1. A process for homopolymerizing 4-methylpentene-1 or copolymerizing 4-methylpentene-1 and a small amount of other α-olefin monomers, wherein the polymerization is carried out in the presence of a catalyst system composed of (A) a solid catalyst component comprising, as essential components, magnesium and titanium, (B) an organoaluminum compound, and (C) a silicon compound represented by formula:

$$R^1_2Si(OR^2)_2 \text{ and/or } R^3Si(OR^4)_3$$

wherein $R^1$, $R^2$, $R^3$, and $R^4$, which may be the same or different, each represents a hydrocarbon group.

2. A process as claimed in Claim 1, wherein said titanium in the solid catalyst component (A) is a trivalent titanium compound.

3. A process as claimed in Claim 1 or 2, wherein said organoaluminum compound is a trialkylaluminum

7

or a mixture of a trialkylaluminum and a dialkylaluminum halide.

4. A process as claimed in Claim 1, 2 or 3, wherein said silicon compound is used in an amount of from 0.005 to 1.0 mol per mol of the organoaluminum compound (B).

5. A process as claimed in Claim 4, wherein said silicon compound is used in an amount of from 0.05 to 0.3 mol per mol of the organoaluminum compound (B).

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | EP-A-0 196 585 (SUMITOMO CHEMICAL CO., LTD) * Claims 1,19,22,23; page 18, line 24 - page 19, line 26; page 21, line 26 * | 1-5 | C 08 F 10/14 C 08 F 4/64 |

TECHNICAL FIELDS SEARCHED (Int. Cl.4)

C 08 F

The present search report has been drawn up for all claims

| Place of search | Date of completion of the search | Examiner |
|---|---|---|
| THE HAGUE | 29-11-1988 | DE ROECK R.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)